# EUROPEAN PATENT APPLICATION

(11) **EP 1 157 737 A2**
(43) Date of publication of application: **28.11.2001**
(21) Application number: 01104914.5
(22) Date of filing: 28.02.2001
(51) Int. Cl.: B01J 19/00

(54) **Methods and apparatus for producing biochips**

(30) Priority: 26.05.2000 JP 2000156231
(71) Applicant: Yokogawa Electric Corporation, Tokyo 180-8750 (JP)
(72) Inventor: Tanaami, Takeo, c/o Yokogawa Electric Corporation, Musashino-shi, Tokyo 180-8750 (JP)
(74) Representative: Henkel, Feiler, Hänzel

(57) **Abstract**

The methods and apparatus of the present invention for fabricating biochips permit the quick and easy mass-production of biological polymer chips with uniform quality and the depositing of very small amounts of biological polymer.

According to the present invention, samples of a biological polymer are deposited on a substrate by means of a capillary array comprising a plurality of capillaries arranged at the same spacing interval as that of sites on the substrate. At this point, it is possible to deposit the biological polymer samples on a plurality of sites on the substrate, all at one time, by applying electric fields or pneumatic pressure to the array of capillaries containing the biological polymer samples. This method offers the advantages that biochips are produced quickly, deposited samples are volumetrically identical, and very small amounts of biological polymer can also be pipetted.

## Description

### BACKGROUND OF THE INVENTION

### Field of the Invention

The present invention relates to improvements in known biochip production methods and apparatus wherein samples of a biological polymer, such as DNA, RNA, protein or sugar chain, are deposited in arrays on a substrate.

### Description of the Prior Art

Generally speaking, DNA chips are 1 to 10 cm² in size and several thousand to several hundred thousand types of DNA segments are arranged within such an area. Methods well known in the art for producing DNA chips include stamping and depositing a solution of cDNA segments prepared through such a process as polymerase chain reaction (PCR) onto a slide glass or silicon substrate using pins on an arrayer. Such a stamping and depositing method is described in the US patent 5,807,522, for example.

The prior art methods have had the problems, however, that the process of deposition using a pin takes a long time and the quality of a stamped site (also referred to as a cell or spot) is not uniform. Furthermore, it is difficult to deposit only small amounts of biological polymer.

### SUMMARY OF THE INVENTION

The object of the present invention is to solve the aforementioned problems by providing methods and apparatus for quickly and easily mass-producing biological polymer chips with uniform quality and easily depositing very small amounts of biological polymer.

In order to attain the object described above, according to claim 1 or 6 of the present invention, a method is provided for producing biochips by arranging samples of a biological polymer, such as DNA, RNA, protein or sugar chain, in arrays on a substrate, wherein the samples are deposited onto the substrate using a capillary array comprising a plurality of capillaries arranged at the same spacing interval as that of sites on the substrate. With this method, it is possible to quickly and easily mass-produce biological polymer chips with uniform quality by only one action.

According to claim 2 or 7 of the present invention, the method can be implemented by applying voltage across the capillary array and the substrate so that the biological polymer samples are deposited by the effect of electric fields.

According to claim 3 or 8 of the present invention, the method can also be implemented by pressurizing each capillary of the capillary array so that the biological polymer samples are deposited by the effect of pressure.

According to claim 4 or 9 of the present invention, it is possible to amplify DNA solutions contained in the capillary array by means of polymerase chain reaction (PCR), thus saving the labor of replenishing capillaries with DNA solutions.

For temperature processing in PCR, according to claim 5 or 10 of the present invention it is possible to utilize an atmospheric temperature change or heating by laser irradiation,.

According to claim 11 of the present invention, the substrate can be located on either the backside or topside of the capillary array, thus providing freedom of configuring the apparatus.

### BRIEF DESCRIPTION OF THE DRAWINGS

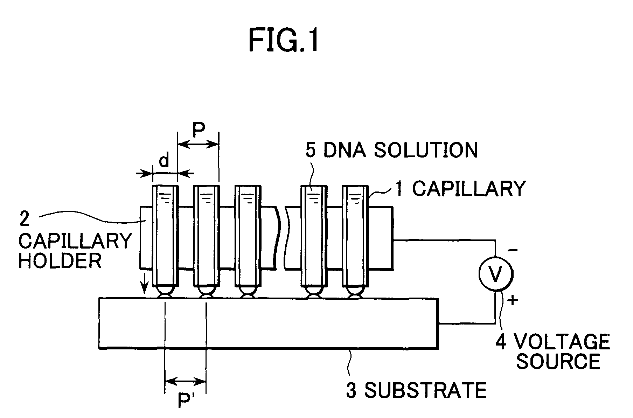

FIG. 1 is a schematic view showing one embodiment of the biochip production apparatus according to the present invention.

### DESCRIPTION OF THE PREFERRED EMBODIMENTS

A preferred embodiment of the present invention will now be described in detail with reference to the accompanying drawing.

A plurality of capillaries with open ends are arranged in an array in such a manner that the ends are flush with one another on the same plane. Different types of DNA solution are injected into the capillaries as necessary. The array of the capillaries is positioned face to face against a planar substrate and voltage is applied across the array and the substrate. Consequently, a DNA solution in each capillary swells out of the bottom end thereof by the effect of electric fields, causing droplets of the DNA solution, each being in the order of a picoliter, to be deposited on the substrate.

Using the method described above, it is possible to easily and quickly produce DNA chips with uniform quality.

FIG. 1 is a schematic view showing one embodiment of apparatus for producing DNA chips using the method.

In FIG. 1, the numeral 1 indicates a capillary, the numeral 2 indicates a capillary holder, the numeral 3 indicates a substrate, and the numeral 4 indicates a voltage source.

A plurality of capillaries 1 are mounted on a capillary holder 2 in an array at the same interval of spacing P. A DNA solution 5 is then injected into each capillary 1. The type of capillary used for this purpose has the inside diameter d that prevents the DNA solution 5 from spilling out of the capillary's bottom end under natural conditions.

A plurality of capillaries 1 configured as described above are mounted vertically on the capillary holder 2 so that their bottom ends are flush with one another on the same horizontal plane.

A substrate 3 is a part with which a DNA chip is produced and the top surface thereof is formed so as to be planar. The substrate 3 is arranged so that the surface is parallel with the bottom end of the capillary 1. Either the capillary holder 2 or the substrate 3 or both of them are configured to be vertically mobile so that the gap between the bottom end of the capillary 1 and the substrate 3 can be varied as necessary.

A voltage source 4 is used to apply voltage across the capillary holder 2 and the substrate 3. For example, a positive voltage level is applied to the substrate 3 and a negative voltage level to the capillary holder 2. When voltage is applied, electric fields act upon the solution inside the capillary 1, causing the solution to swell below the bottom end of the capillary 1 toward the substrate 3.

The following explains the behavior of the apparatus configured as described above.

DNA segments (solutions) are previously injected into a plurality of capillaries 1. Since the capillary 1 is a sufficiently thin tubing with inside diameter d, the solution never overflows out of the capillary's bottom end, as the surface tension exceeds the gravitational force.

The capillary holder 2 is brought close to the substrate 3 so that an appropriate gap is formed between them. Then, appropriate voltage is applied across the capillary holder 2 and the substrate 3. Consequently, the DNA solution inside the capillary 1 swells below the capillary's bottom end by the effect of electric fields, causing droplets of the DNA solution, each being in the order of a picoliter, to be deposited on the substrate 3. After deposition, electrification is stopped and the capillary holder 2 is moved away from the substrate 3.

At this point, the spacing P of the array of capillaries can be adjusted to match the spacing P' between the target sites (cells) on a DNA chip so that the DNA solution is deposited on all of the sites at one time. With this method, it is possible to quickly deposit volumetrically identical droplets of the DNA solution. This method also makes it easy to pipette very small amounts of the DNA solution.

It should be noted that the inside diameter d of the capillary 1 can be any value as long as it is smaller than the spacing P.

In the explanation given above, only a specific preferred embodiment was mentioned for the purpose of describing the present invention and showing an example of carrying out the invention. The above-mentioned embodiment is therefore to be considered as illustrative and not restrictive. The present invention may be embodied in other ways without departing from the spirit and essential characteristics thereof. Accordingly, it should be understood that all modifications falling within the spirit and scope of the present invention are covered by the appended claims.

For example, each capillary 1 may be pressurized with air or heat or by other means from the side opposite to the substrate 3, instead of applying voltage.

As another alternative example, the positional relationship between the substrate 3 and the capillary 1 may be reversed vertically. Positioning the substrate 3 above the capillary 1 is advantageous in that the substrate 3 is less likely to become contaminated with dust.

As yet another alternative example, PCR may be applied within a capillary. Applying PCR in this manner is advantageous in that the only task required is simply to replenish each capillary with a common, amplification-purpose solution, thus saving the labor of supplying DNA solutions.

For heat treatment in PCR, it is possible to cycle the PCR process at higher speeds by means of an atmospheric temperature change or heating by laser irradiation. It should be noted that known means can be used to irradiate laser beams.

It should also be noted that the present invention is not limited to DNA; it is also possible to produce biological polymer chips such as RNA, protein or sugar chain chips.

According to the present invention, it is possible to deposit samples of a biological polymer on a plurality of sites on a substrate, all at one time, by applying electric fields or pneumatic pressure to an array of capillaries containing the samples. This method offers the advantages that biochips are produced quickly, deposited biological polymer samples are volumetrically identical, and very small amounts of biological polymer solution can also be pipetted.

## Claims

1. A method for producing biochips by arranging samples of a biological polymer, such as DNA, RNA, protein or sugar chain, in arrays on a substrate, wherein said biological polymer samples are deposited onto said substrate using a capillary array consisting of a plurality of capillaries arranged at the same spacing interval as that of sites on said substrate.

2. The method of claim 1, wherein said biological polymer samples are deposited by applying voltage across said capillary array and said substrate.

3. The method of claim 1, wherein said biological polymer samples are deposited by pressurizing each capillary of said capillary array.

4. The method of claim 1, wherein DNA contained in said capillary array is amplified within the capillaries thereof by means of polymerase chain reaction.

5. The method of claim 4, wherein temperature processing in said polymerase chain reaction is performed by means of an atmospheric temperature change or heating by laser irradiation.

6. An apparatus for producing biochips by arranging samples of a biological polymer, such as DNA, RNA, protein or sugar chain, in arrays on a substrate, comprising:
a capillary holder for supporting a plurality of capillaries arranged at the same spacing interval as that of sites on a biochip;
means for adjusting the gap formed between said capillary holder and said substrate by moving either said capillary holder or said substrate or both; and
means for transferring said biological polymer samples from said capillaries to said substrate so that said biological polymer samples are deposited thereon.

7. The apparatus of claim 6, wherein said transfer means comprises a voltage source for applying voltage across said capillary holder and said substrate, whereby said biological polymer samples contained in said capillaries are deposited onto said substrate.

8. The apparatus of claim 6, wherein said transfer means comprises means for pressurizing said capillaries, whereby said biological polymer samples contained in said capillaries are deposited onto said substrate.

9. The apparatus of any of claims 6, 7 and 8, further comprising means for amplifying DNA in said capillaries therewithin by means of polyrnerase chain reaction.

10. The apparatus of claim 9, wherein temperature processing in said polymerase chain reaction is performed by means of an atmospheric temperature change or heating by laser irradiation.

11. The apparatus of any of claims 6, 7, 8 and 9, wherein said substrate is positioned above or below said capillaries.
